# EUROPEAN PATENT APPLICATION

(11) **EP 4 733 990 A1**
(43) Date of publication of application: **29.04.2026**
(21) Application number: 25209954.4
(22) Date of filing: 21.10.2025
(51) Int. Cl.: G06N 3/045, G06N 3/0475, G06N 3/082, G06N 3/096, G06T 11/00, G06V 10/82

(54) **GENERATION PROGRAM, GENERATION METHOD, AND INFORMATION PROCESSING DEVICE**

(30) Priority: 25.10.2024 JP 2024188637
(71) Applicant: Fujitsu Limited, Kawasaki-shi, Kanagawa 211-8588 (JP)
(72) Inventor: KINGETSU, Hiroaki, Kawasaki-shi, Kanagawa, 211-8588 (JP)
(74) Representative: Hoffmann Eitle

(57) **Abstract**

A generation program of a neural network is used as a subnetwork to be added to an image generation AI, the generation program causes a computer to execute a process including: training each of a plurality of neural networks using a training dataset that includes a plurality of pieces of training data where image data corresponding to specific concepts different for each of the neural networks is associated with a specific token and part of a plurality of tokens different from the specific token; and fusing the neural networks after the training to generate a subnetwork that corresponds to a plurality of concepts.

## Description

### Technical Field

The embodiments discussed herein are related to a generation program, a generation method, and an information processing device.

### Background Art

As one of the fine tuning methods for trained machine learning models such as image generation Artificial Intelligence (AI), Low-Rank Adaptation (LoRA) has been proposed.

Instead of changing the parameters of the image generation AI, LoRA is a method that adds subnetworks represented by low-rank matrices in parallel as modules of the image generation AI, and trains the difference in the parameters of the image generation AI by tuning in the subnetworks.

One of the advantages of LoRA is that it is easy to switch between tasks. For example, it is possible to train each of a plurality of LoRAs to generate different objects, and combine the LoRAs to collectively output a plurality of objects within a single image.

As one technology for combining LoRAs in this manner, there is a method called Weight Fusion that takes the average of the weights of a plurality of LoRAs and fuses the LoRAs. The related technologies are described, for example, in: Edward J. Hu, Yelong Shen, Phillip Wallis, Zeyuan Allen-Zhu, Yuanzhi Li, Shean Wang, Lu Wang, Weizhu Chen "LoRA: Low-Rank Adaptation of Large Language Models" International Conference on Learning Representations, 2021.

Accordingly, it is an object in one aspect of an embodiment of the present invention to provide a generation program, a generation method, and an information processing device capable of suppressing quality deterioration in image generation.

### Solution to Problem

According to an aspect of an embodiment, a generation program of a neural network is used as a subnetwork to be added to an image generation AI, the generation program causes a computer to execute a process including: training each of a plurality of neural networks using a training dataset that includes a plurality of pieces of training data where image data corresponding to specific concepts different for each of the neural networks is associated with a specific token and part of a plurality of tokens different from the specific token; and fusing the neural networks after the training to generate a subnetwork that corresponds to a plurality of concepts.

### Advantageous Effects of Invention

According to one embodiment, quality deterioration in image generation can be suppressed.

### Brief Description of Drawings

FIG. 1 is a block diagram illustrating an example of the functional configuration of a server device;
FIG. 2 is a diagram presenting an example of Single Subject Generation;
FIG. 3 is a diagram presenting an example of Multi Subject Generation;
FIG. 4 is a schematic diagram for describing LoRA;
FIG. 5 is a schematic diagram for describing fusion of LoRAs;
FIG. 6 is a schematic diagram illustrating one aspect of a problem-solving approach;
FIG. 7 is a graph indicating an example of changes in the weights of LoRAs;
FIG. 8 is a diagram illustrating an example of region setting;
FIG. 9 is a schematic diagram for describing an example of a first training method;
FIG. 10 is a chart indicating an example of extended prompts;
FIG. 11 is a schematic diagram for describing a second training method;
FIG. 12 is a diagram presenting output examples of third subnetworks;
FIG. 13 is a diagram presenting output examples when the third subnetworks are fused;
FIG. 14 is a diagram presenting output examples when the third subnetworks are fused;
FIG. 15 is a diagram presenting output examples of simple fusion;
FIG. 16 is a flowchart illustrating procedures of first training processing;
FIG. 17 is a flowchart illustrating procedures of second training processing; and
FIG. 18 is a diagram illustrating an example of the hardware configuration.

### Embodiments for Carrying Out the Invention

However, the above-mentioned Weight Fusion is prone to have a phenomenon called collapse in which image generation becomes unstable, which makes it difficult to suppress quality deterioration in image generation.

Preferred embodiments will be explained with reference to accompanying drawings. Note that the embodiments simply illustrate examples and aspects, and the structures, operations, functions, properties, characteristics, methods, usages, and the like pertaining to the present disclosure are not limited by such examples.

### First Embodiment

### System Configuration

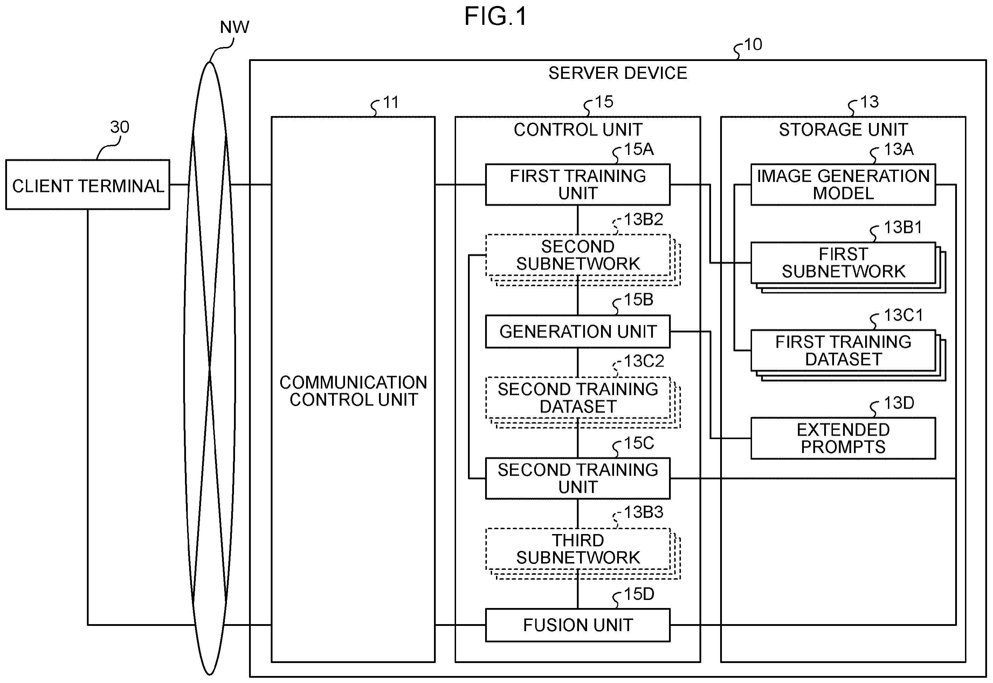

FIG. 1 is a block diagram illustrating an example of the functional configuration of a server device 10. FIG. 1 illustrates the server device 10 that provides a LoRA fusion function for collectively outputting a plurality of objects in a single image by fusing a plurality of subnetworks.

The server device 10 can provide the above-described LoRA fusion function as a cloud service by executing Platform as a Service (PaaS) type middleware or Software as a Service (SaaS) type application. Note that the server device 10 is simply an example of an information processing device that provides the LoRA fusion function.

As illustrated in FIG. 1, the server device 10 can be communicatively connected to a client terminal 30 via a network NW. For example, the network NW may be any type of communication network, whether wired or wireless, such as the Internet or a Local Area Network (LAN). Although FIG. 1 illustrates an example where one client terminal 30 is connected per server device 10, any number of client terminals 30 may be connected as well.

The client terminal 30 is a terminal device that receives the LoRA fusion function described above. For example, the client terminal 30 may be achieved by any computer such as a personal computer, a smartphone, a tablet terminal, or a wearable terminal.

While the example where the LoRA fusion function is provided as a cloud service is described herein, it is not limited thereto. For example, the LoRA fusion function described above may be provided on-premise. In addition, while the example where the LoRA fusion function is provided in a client server system is described, it is not limited thereto. For example, the LoRA fusion function may be provided on a stand-alone basis with an application running on the client terminal 30 causing the client terminal 30 to execute the processing corresponding to the LoRA fusion function described above.

### Image Generation AI Use Scenes

In a scene where an image of a specific object is output using an image generation AI, the following conditioning can be used, simply as an example. For example, a specific image is conditioned to have the image generation AI to output related images associated with an object contained in the image.

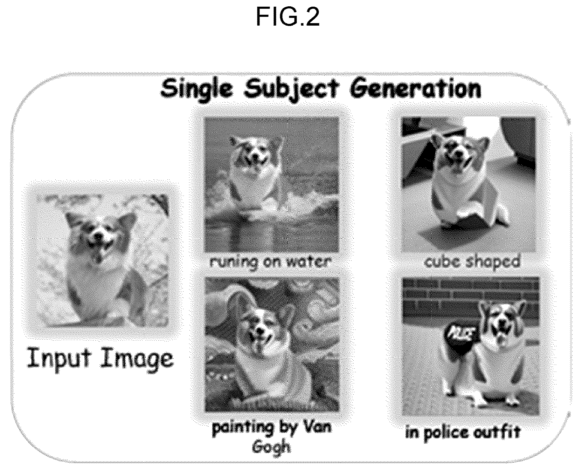

FIG. 2 is a diagram presenting an example of Single Subject Generation. For example, FIG. 2 presents an example where a specific dog contained in Input Image is used as input, and related images corresponding to prompts such as "specific dog running on water," "specific dog in cubic shape," "specific dog by Van Gogh," and "specific dog in police outfit" are output.

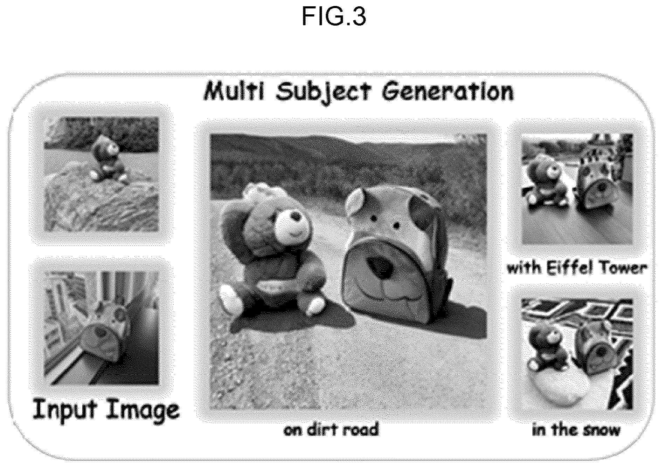

FIG. 3 is a diagram presenting an example of Multi Subject Generation. For example, FIG. 3 presents an example where a specific dog and a specific backpack contained in each of two Input Images are used as input, and related images corresponding to prompts such as "specific dog and specific backpack on dirt road", "specific dog and specific backpack with Eiffel Tower," and "specific dog and specific backpack in the snow" are output.

The output of these related images presented in FIG. 2 and FIG. 3 is referred to as Subject/Object Generation. Note here that it is called Single Subject/Object Generation when the output is of a single object, and it is called Multi Subject/Object Generation when it is the simultaneous output of a plurality of objects. The terms "Subject" and "Object" used herein may be used as the same meaning.

### Example of Subnetwork

Hereinafter, LoRA is referred to as an example of a subnetwork that is added as a module of the image generation AI. LoRA is a space-saving method in which the difference in weights from the original model due to tuning is represented by a low-rank matrix.

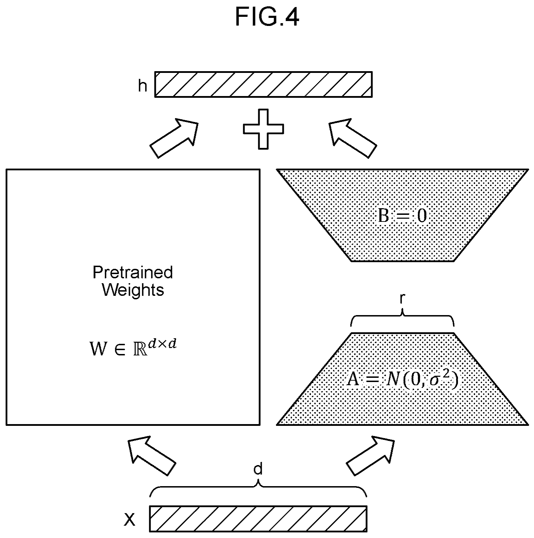

FIG. 4 is a schematic diagram for describing LoRA. As illustrated in FIG. 4, a weight matrix W representing the difference is configured with a low-rank matrix A, a low-rank matrix B, and a scaling hyperparameter γ. This decomposition applies only to a specific parameter group and corresponds to linear projection of Self-Attention of each transformer layer. This makes it possible to maintain the performance while reducing the computational load on the original model.

### LoRA Fusion

When achieving Multi Subject Generation using such LoRA, each of a plurality of LoRAs is trained to generate different objects, and the LoRAs are combined to collectively output a plurality of objects within a single image.

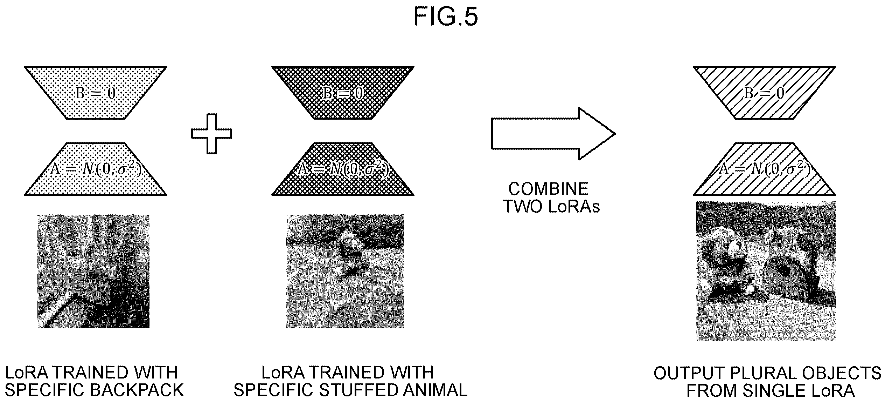

FIG. 5 is a schematic diagram for describing fusion of LoRAs. As illustrated in FIG. 5, by fusing the LoRA trained to generate images of a specific backpack with the LoRA trained to generate images of a specific stuffed animal, a plurality of objects that are the specific backpack and the specific stuffed animal can be output from the fused LoRA.

### One Aspect of Problem

However, as in Weight Fusion described above in the BACKGROUND section, simply fusing LoRAs by taking the average of the weights of a plurality of LoRAs is prone to have a phenomenon called collapse in which image generation becomes unstable, which makes it difficult to suppress the quality deterioration in image generation.

Hereafter, from the aspect of distinguishing LoRA fusion by the above-described conventional technology, Weight Fusion, from the LoRA fusion function according to the present embodiment, the former may be referred to as "simple fusion."

### One Aspect of Problem Solving Approach

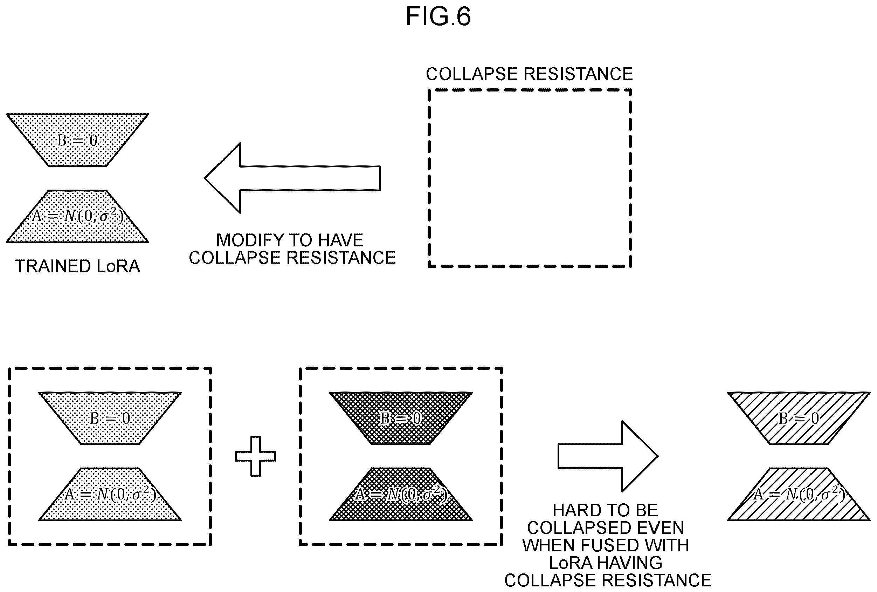

FIG. 6 is a schematic diagram illustrating one aspect of a problem-solving approach. As illustrated in FIG. 6, the LoRA fusion function according to the present embodiment achieves training that enables each LoRA itself to acquire collapse resistance before fusion of the LoRAs. In other words, training LoRAs with extraction of features and model representations different from each other allows individual LoRAs to have collapse resistance that retains the unique representation capacities without interfering with representation capacities of each other. This suppresses occurrence of the collapse phenomenon under LoRA fusion. Therefore, with the LoRA fusion function according to the present embodiment, quality deterioration in image generation can be suppressed.

Note here that the LoRA fusion function according to the present embodiment also has an advantageous effect over other conventional technologies other than the simple fusion described above.

### Composable-Diffusion

For example, as another conventional technology, there is a method called Composable-Diffusion that changes the weight of LoRA used for each region rather than integrating those into one model. For example, in Composable-Diffusion, the weights of LoRA is switched during the reverse diffusion process that iteratively removes noise in a Diffusion model used for the image generation AI.

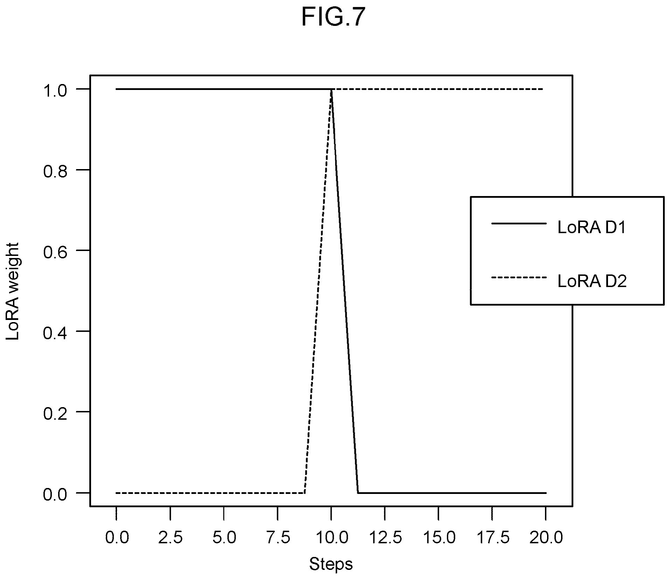

FIG. 7 is a graph indicating an example of changes in the weights of LoRAs. The vertical axis of the graph illustrated in FIG. 7 indicates the weights of LoRAs, and the horizontal axis indicates the number of steps in the reverse diffusion process of the Diffusion model. As illustrated in FIG. 7, the weight of LoRA D1 trained to generate images of an object D1 and the weight of LoRA D2 trained to generate images of an object D2 are switched. For example, referring to the example illustrated in FIG. 7, the weight of LoRA D1 is used until the number of steps in the reverse diffusion process reaches 10, while the weight of LoRA D2 is used when the number of steps in the reverse diffusion process goes beyond 10. Such weight changes are applied on a region-by-region basis.

As one aspect of Composable-Diffusion, LoRAs used for image generation need to be loaded into a memory, so that space complexity is increased as the number of LoRAs increases. In comparison, the LoRA fusion function according to the present embodiment uses a single fused LoRA for image generation, which makes it possible to reduce the use amount of memory and computational complexity for image generation.

As another aspect of Composable-Diffusion, the magnitude of weights and parameters increase, so that it is highly difficult to make adjustment by user input. For example, it is difficult to make a fine balance since the patterns vary greatly depending on how the weights are applied. In comparison, the LoRA fusion function according to the present embodiment can eliminate the need for extra user input.

As still another aspect, Composable-Diffusion is not a direct solution to the problem, since it is an intervention (model change) into the reverse diffusion process from the middle of the process. On the contrary, the LoRA fusion function according to the present embodiment allows each LoRA to attain collapse resistance, thus achieving a direct solution to the problem.

### Region Prompting

As another conventional technique, there is a method called Region Prompting that changes the prompt and image generation AI for each region set in the image.

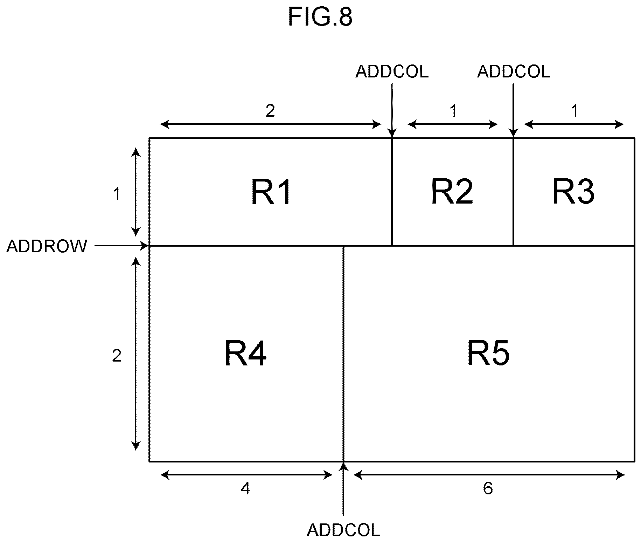

FIG. 8 is a diagram illustrating an example of region setting. For example, referring to the example illustrated in FIG. 8, regions R1 through R5 are set by adding columns and rows. It is possible to change not only the prompts for each of the regions R1 through R6 set in this manner by controlling Mask, ControlNet, Reference-Only, and the like but also the LoRAs to be applied for each of the regions R1 through R5.

One aspect of Region Prompting is that image generation is executed on a region-by-region basis, which increases the computational complexity related to image generation. In comparison, the LoRA fusion function according to the present embodiment can reduce the computational complexity related to image generation since image generation by LoRAs fused into one is completed at once.

As another aspect, Region Prompting also needs to have user input for changing prompts and models, so that the cost for modification is high. On the contrary, the LoRA fusion function according to the present embodiment does not need to have extra user input in the first place.

Still another aspect is that when using different models for each region in Region Prompting, the backgrounds and textures often do not match between the regions, which may result in having seams between the regions and therefore may generate images with a sense of discomfort. On the contrary, the LoRA fusion function according to the present embodiment generates images by LoRAs fused into one, so that it is not likely to generate images with a sense of discomfort in the first place.

### Configuration of Server Device 10

Next, the functional configuration of the server device 10 that provides the LoRA fusion function will be described. FIG. 1 illustrates a schematic view of excerpted blocks related to the LoRA fusion function of the server device 10. As illustrated in FIG. 1, the server device 10 includes a communication control unit 11, a storage unit 13, and a control unit 15. Note that FIG. 1 simply illustrates the excerpted functional units related to the LoRA fusion function described above, and functional units other than those illustrated therein may also be provided in the server device 10.

The communication control unit 11 is a functional unit that controls communication with other devices such as the client terminal 30. As one mode, the communication control unit 11 can be achieved by a network interface card such as a LAN card. As one aspect, the communication control unit 11 accepts various requests and various uploads from the client terminal 30 or outputs the processing results to the client terminal 30.

The storage unit 13 is a functional unit that stores various kinds of data. As one mode, the storage unit 13 may be achieved by an internal, external, or auxiliary storage of the server device 10. For example, the storage unit 13 stores an image generation model 13A, a first subnetwork 13B1, a first training dataset 13C1, and extended prompts 13D. Note that each piece of data will be described later along with the scenes where such data is referred to or registration thereof is executed.

The control unit 15 is a functional unit that performs overall control of the server device 10. For example, the control unit 15 may be achieved by a hardware processor. As illustrated in FIG. 1, the control unit 15 includes a first training unit 15A, a generation unit 15B, a second training unit 15C, and a fusion unit 15D. Note that the control unit 15 may be achieved by a hard-wired logic or the like.

The first training unit 15A is a processing unit that executes first training processing to train the first subnetwork 13B1 to generate images of objects corresponding to a specific concept using the image generation model 13A, the first subnetwork 13B1 and the first training dataset 13C1. The "first training processing" herein is distinguished from the training that enables the acquisition of collapse resistance at the time of fusion. Hereafter, "second training processing" may be used to refer to the training that enables the acquisition of collapse resistance at the time of fusion.

For example, the image generation model 13A may be a Diffusion model that is achieved by an open source such as Stable Diffusion. The first subnetwork 13B1 may also include the initial parameters of the matrix A and the matrix B included in the LoRA. For example, the matrix A is initialized with a Gaussian distribution while the matrix B is initialized with 0. Furthermore, the first training dataset 13C1 is a set of training images containing the objects corresponding to a specific concept. For example, the first training dataset 13C1 may be uploaded from the client terminal 30 for each number of objects to be output in image generation under LoRA fusion, that is, for each of number K concepts.

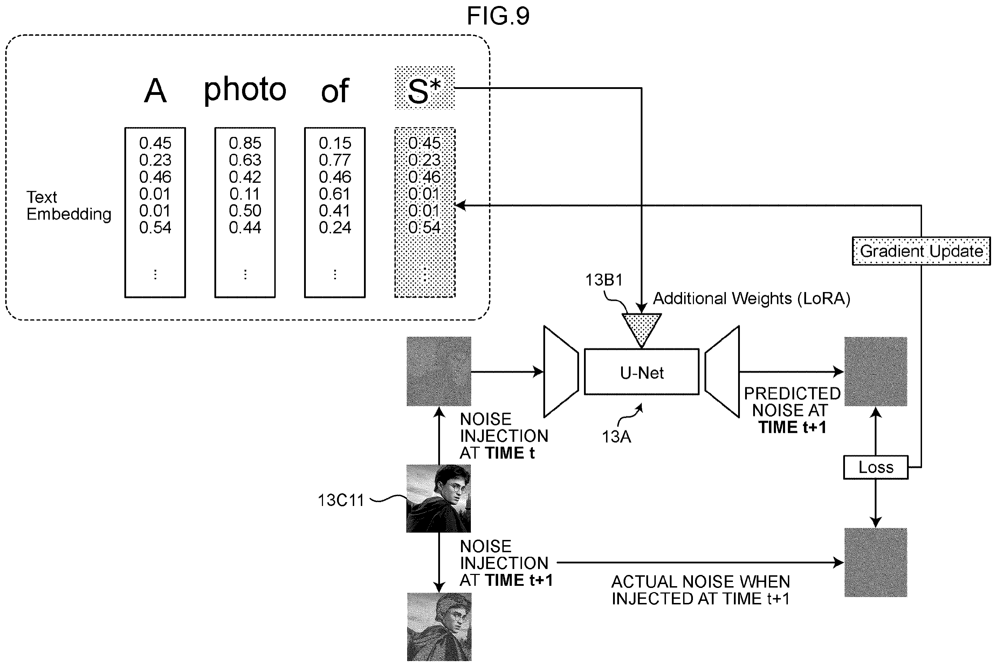

FIG. 9 is a schematic diagram for describing an example of a first training method. FIG. 9 illustrates Stable Diffusion where image generation of an object corresponding to a specific concept "Harry Potter" is trained. Note that "concept" herein may refer to a new concept that is outside the distribution (Out-of-Distribution) of the training dataset used to train the image generation model 13A.

As illustrated in FIG. 9, Stable Diffusion contains: the image generation model 13A that includes an encoder and a decoder of Variational Autoencoder (VAE), a Diffusion model (U-Net), and a text encoder; and LoRA 13B1.

Note here that FIG. 9 illustrates an example where a prompt "A photo of S*" containing an unknown word S* (= Harry Potter) to which a label of new concept is assigned is input to the text encoder. The prompt input to the text encoder in this manner is converted to embedding vectors by the text encoder and then input as conditioning information to the Cross-Attention layer in the U-Net. The degree of reflecting the embedding vectors in the noise prediction is tuned by controlling the Transformer hyperparameters according to the method such as Classifier Free Guidance (CFG).

With such a configuration, the first training unit 15A trains the Diffusion model to execute noise prediction in the reverse diffusion process. For example, FIG. 9 illustrates an excerpted scene when predicting the noise to be removed from a training image 13C11 with the noise injected at time t. In this case, the parameters of the text encoder and the LoRA 13B1 are trained based on the loss acquired from the noise predicted at time t by the Diffusion model, that is, the noise to be removed at time t+1, and from the actual noise injected at time t+1 in the diffusion process.

As a result, the LoRA trained to generate images of the object corresponding to the specific concept "Harry Potter" is acquired as a second subnetwork 13B2.

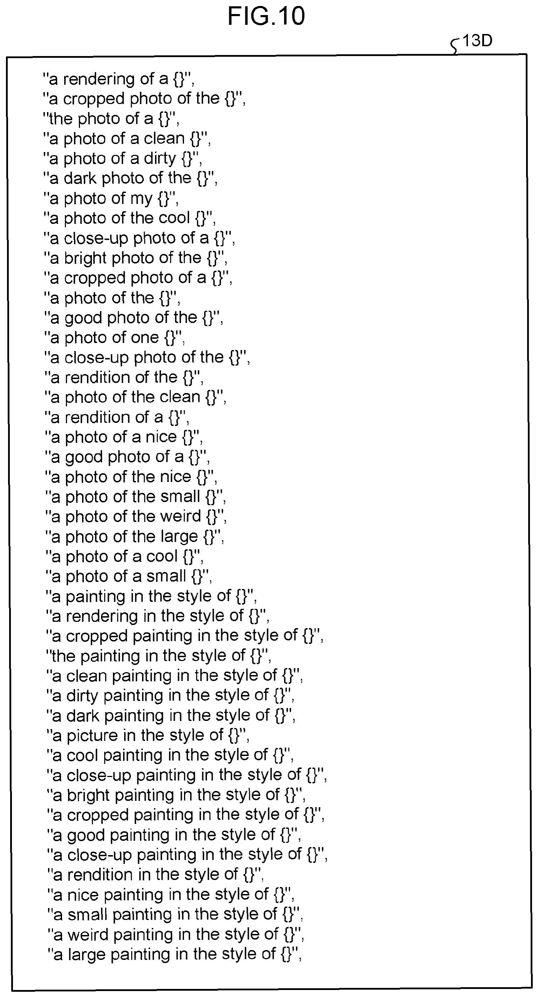

The generation unit 15B is a processing unit that generates a second training dataset used for the second training processing. As one mode, the generation unit 15B generates a set of prompts using the extended prompts 13D indicated in FIG. 10 for each object to be output by image generation under LoRA fusion, that is, for each concept. FIG. 10 is a chart indicating an example of the extended prompts 13D. FIG. 10 illustrates part of a prompt group excerpted from a result sample of Concepts 101 dataset that is open data. For example, the prompt group indicated in FIG. 10 can be expected to be a set of prompts by which a normal image generation AI is likely to successfully generate images. The generation unit 15B then inputs the set of prompts generated using the extended prompts 13D into the image generation model 13A to which the second subnetwork 13B2 is incorporated to generate, as a second training dataset 13C2, a set of training images used for the second training processing.

As a result, it is possible to acquire, as the second training dataset 13C2, a set of training images generated by inputting the set of prompts generated using the extended prompts 13D into the image generation model 13A to which the second subnetwork 13B2 is incorporated. For example, the number of samples of training images may be set to 10 or more, since the output of image generation is stabilized at about 10 samples. This makes it possible to acquire the second training dataset 13C2 that is more scalable than the first training dataset 13C1 that is the preset designated via the user input or the like.

For example, in a case of a new concept "Harry Potter," prompts such as "Harry Potter with different glasses," "Harry Potter with a hat," "Harry Potter in a bathing suit," and "Harry Potter with a different hairstyle," are generated according to the extended prompts 13D. By inputting each of those prompts into the image generation model 13A to which the second subnetwork 13B2 is incorporated, a set of training images corresponding to the specific concept "Harry Potter" is generated as the second training dataset 13C2.

The second training unit 15C is a processing unit that executes the second training processing that allows acquisition of collapse resistance at the time of fusion by using the image generation model 13A, the second subnetwork 13B2, and the second training dataset 13C2.

As one mode, the second training unit 15C divides a word S* corresponding to a specific concept into a plurality of word pseudo-tokens, such as a sequence of n pseudo-tokens <S₁*, S₂*, ..., Sₙ*>, for each object to be output by image generation under LoRA fusion, that is, for each concept.

Note here that the number n of pseudo-tokens is a hyperparameter and may be, for example, any integer. For example, the stability of output of image generation can be increased by setting a larger value for the number n of pseudo-tokens. However, since the stability saturates at a certain value, the number n of pseudo-tokens can be set with the lowest value of the stability at saturation as the upper limit.

Thereafter, the second training unit 15C assigns, for each prompt contained in the second training dataset 13C2, a plurality of pseudo-tokens to the word S* corresponding to the specific concept in the given prompt. At this time, among the sequence of n pseudo-tokens <S₁*, S₂*, ..., Sₙ*>, the second training unit 15C always inputs a specific pseudo-token such as the first pseudo-token S₁* to the prompt while randomly dropping out the pseudo-tokens other than the specific pseudo-token, such as the second and subsequent pseudo-tokens <S₂*, ...,Sₙ*>.

Note here that the probability N (%) for randomly dropping out the pseudo-tokens is a hyperparameter. As for the probability N (%), a uniform value such as 50% may be set for the second and subsequent pseudo-tokens <S₂*, ..., Sₙ*>, or different values may be set for the second and subsequent pseudo-tokens.

In this manner, the second training unit 15C assigns the specific pseudo-token S₁* and the other pseudo-tokens <S₂*, ..., Sₙ*> remaining without being randomly dropped out to the word S* corresponding to the specific concept among the prompts contained in the second training dataset 13C2.

As a result, among the prompts contained in the second training dataset 13C2, there are differences in the other pseudo-tokens that remain without being randomly dropped out. Therefore, perturbation (Augmented Prompt Regularization) is applied to the specific pseudo-token S₁* to be able to keep the identicalness even when fused with another LoRA. As a result, the generalizability of the specific pseudo-token S₁* is improved compared to the other pseudo-tokens <S₂*, ..., Sₙ*>, and "indescribable and true" unique representations can be tokenized into the specific pseudo-token S₁*. On the other hand, some kind of concept that is fundamentally irrelevant and difficult to verbalize may be tokenized to into the other pseudo-tokens <S₂*, ..., Sₙ*>.

The second training unit 15C then trains the parameters of the second subnetwork 13B2 using the prompts to which the specific pseudo-token S₁* and other pseudo-tokens remaining without being randomly dropped out are input as explanatory variables, and the training images contained in the second training dataset 13C2 as response variables.

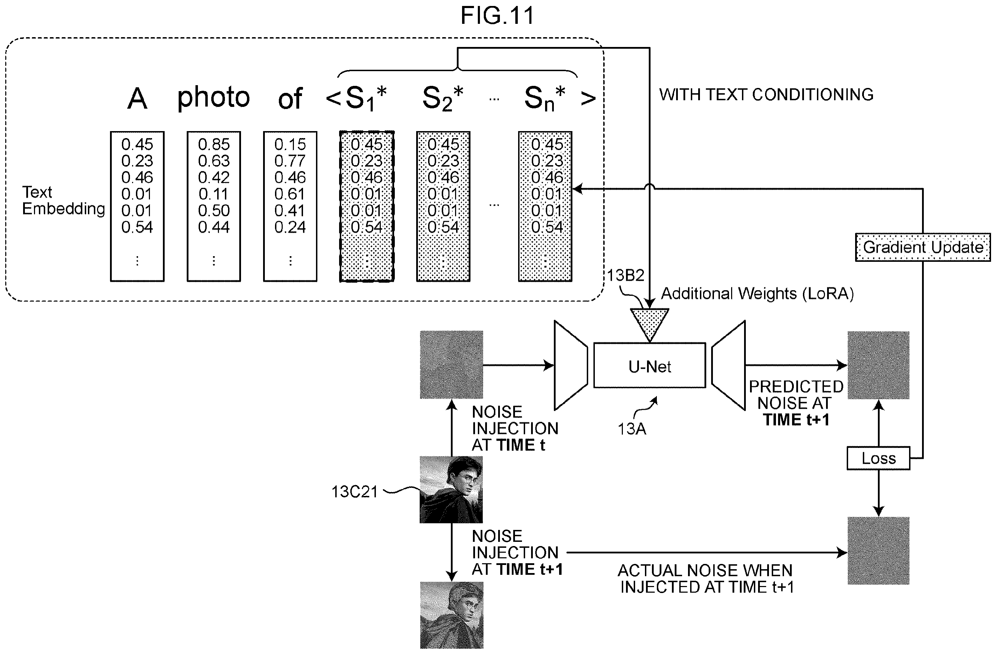

FIG. 11 is a schematic diagram for describing a second training method. FIG. 11 illustrates Stable Diffusion where the parameters of LoRA 13B2 trained to generate images of the object corresponding to the specific concept "Harry Potter" are trained using the prompt with the sequence of n pseudo-tokens <S₁*, S₂*, ..., Sₙ*> assigned to the word S* corresponding to the specific concept "Harry Potter" as the explanatory variable and a training image 13C21 contained in the second training dataset 13C2 as the response variable.

Note here that FIG. 11 also illustrates an excerpted scene when predicting the noise to be removed from the training image 13C21 with the noise injected at time t. In this case, the parameters of the text encoder and LoRA 13B2 are trained based on the loss acquired from the noise predicted at time t by the Diffusion model, that is, the noise to be removed at time t+1, and from the actual noise injected at time t+1 in the diffusion process.

As a result of such training, the LoRA with collapse resistance at the time of fusion is acquired as a third subnetwork 13B3.

Although it is referred herein to the example where the word S* corresponding to the specific concept is replaced in the background with the specific pseudo-token S₁* and other pseudo-tokens <S₂*, ..., Sₙ*> remaining without being randomly dropped out at the time of execution of the second training processing, each of the prompts contained in the second training dataset may be replaced with the pseudo-tokens.

The fusion unit 15D is a processing unit that fuses a plurality of LoRAs. As one mode, the fusion unit 15D fuses the third subnetworks 13B3 trained by the second training unit 15C for each of the K concepts into one. At this time, the fusion unit 15D can combine the K third subnetworks 13B3 by calculating the statistics such as the arithmetic mean, weighted mean, and median of the weights of each LoRA among the K third subnetworks 13B3. The fusion unit 15D then inputs the prompt containing the union of the sequences of pseudo-tokens corresponding to each of the K concepts to the text encoder of the image generation model 13A to which the subnetworks fused into one are incorporated to collectively output the objects corresponding to the K concepts in a single image.

### One Aspect of Effects

Next, the experimental results are presented from the aspect of verifying the effectiveness of the suppression of quality deterioration in image generation under LoRA fusion according to the present embodiment. For example, in the present experiment, chillout mix that is fully fine-tuned for Stable Diffusion to be used for people is used as the image generation model 13A. Furthermore, in the present experiment, as examples of the third subnetwork 13B3, LoRA (A), where a Harry Potter image is trained in association with a sequence of pseudo-tokens of Harry Potter, and LoRA (B) where a Hermione image is trained in association with a sequence of pseudo-tokens of Hermione are used.

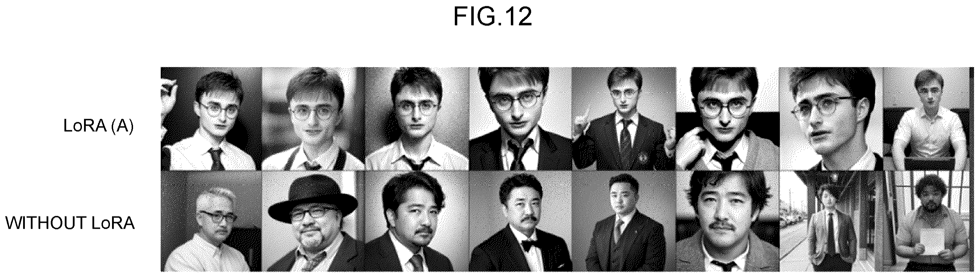

FIG. 12 is a diagram presenting output examples of the third subnetworks. The top row of FIG. 12 presents the images output by the LoRA (A) to which the prompt "A photo of <pseudo-token sequence>, man" is input. An example of inputting a random string "abd33farr" is discussed herein as an example of <pseudo-token sequence>. In addition, the bottom row of FIG. 12 presents the images output by LoRA when the prompt "A photo of <pseudo-token sequence>, man" is input to the LoRA untrained with the pseudo-tokens. As in FIG. 12, with the LoRA untrained with the pseudo-tokens, it can be seen that generation results are only "man" without being affected by the random string "abd33farr". On the other hand, it can be seen that the LoRA (A) are trained with the pseudo-tokens that are associated with Harry Potter.

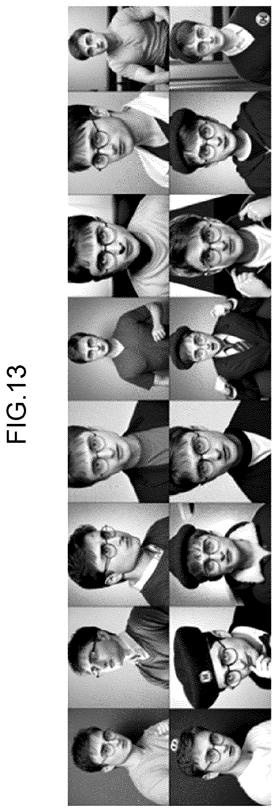

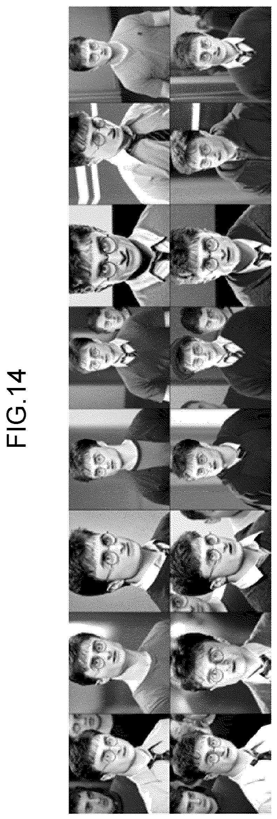

FIG. 13 and FIG. 14 are diagrams presenting output examples when the third subnetworks are fused. For example, FIG. 13 presents output examples of a case where the pseudo-token sequence of Harry Potter and the pseudo-token sequence of Hermione are input as <pseudo-token sequence>. FIG. 14 presents output examples of a case where only the first pseudo-token in the pseudo-token sequence of Harry Potter and only the first pseudo-token in the pseudo token sequence of Hermione are input as <pseudo token sequence>.

The top rows of FIG. 13 and FIG. 14 present the images output by the fused LoRAs, that is, LoRA (A) and LoRA (B), where the prompt "wearing blue shirts" is input. In addition, the bottom rows of FIG. 13 and FIG. 14 present the images output by the fused LoRAs, that is, LoRA (A) and LoRA (B), where the prompt "wearing red hat" is input.

For example, referring to the example presented in FIG. 13, images of the objects corresponding to the two concepts of Harry Potter and Hermione are generated as designated in the prompts, so that it is confirmed that high-quality fusion is achieved. Referring to the example presented in FIG. 14, while images of the objects corresponding to the two concepts of Harry Potter and Hermione are generated, images that do not reflect the designation of the prompts are observed. This confirms that the "indescribable and true" unique representations are tokenized into the specific pseudo-token S₁*.

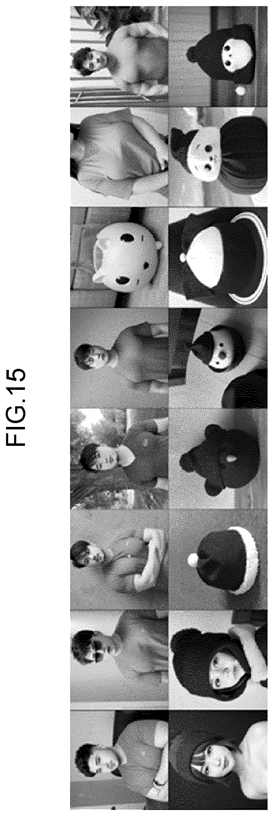

FIG. 15 is a diagram presenting output examples of simple fusion. FIG. 15 presents output examples in simple fusion of LoRA (a) trained to generate images of Harry Potter and LoRA (b) trained to generate images of Hermione as the examples of the second subnetwork 13B2. The top row of FIG. 15 presents output examples of simple fusion when the prompt "wearing blue shirts" is input. In addition, the bottom row of FIG. 15 presents output examples of simple fusion when the prompt "wearing red hat" is input. For example, referring to the example presented in FIG. 15, images of the objects corresponding to the two concepts of Harry Potter and Hermione are not generated, and it is observed that collapse has occurred at the time of fusion.

### Processing Flow

Next, the processing flow of the server device 10 according to the present embodiment will be described. Here, after describing (1) first training processing executed by the server device 10, (2) second training processing will be described.

### (1) First Training Processing

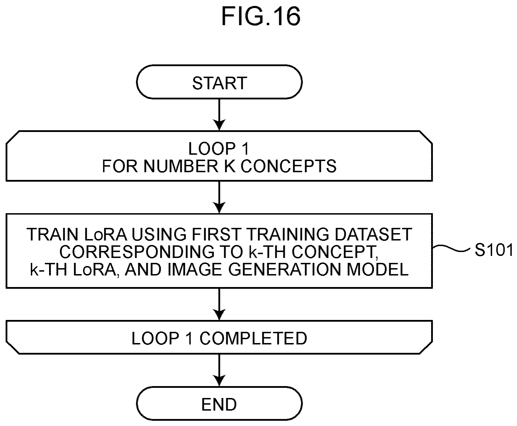

FIG. 16 is a flowchart illustrating the procedures of the first training processing. As indicated in FIG. 16, the first training unit 15A executes loop processing 1 that iterates the processing of step S101 for the number of objects to be output by image generation under LoRA fusion, that is, for the number of times corresponding to the number K of concepts. Note that the processing of step S101 may be executed in parallel for each of the K concepts.

That is, the first training unit 15A trains LoRA using the image generation model 13A, the first subnetwork 13B1, and the first training dataset 13C1 corresponding to the k-th concept (step S101).

By iterating such loop processing 1, the LoRA trained to generate images of the objects corresponding to individual concepts is acquired for each of the K concepts as the second subnetwork 13B2.

### (2) Second Training Processing

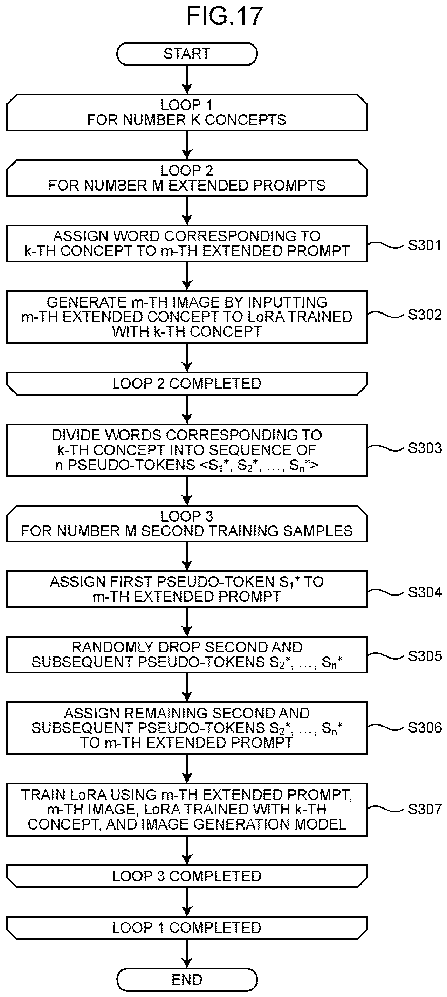

FIG. 17 is a flowchart illustrating the procedures of the second training processing. As indicated in FIG. 17, the generation unit 15B and the second training unit 15C execute the loop processing 1 that iterates the processing of step S301 through step S307 for the number of objects to be output by image generation under LoRA fusion, that is, for the number of times corresponding to the number K of concepts. Note that the processing of step S301 through step S307 may be executed in parallel for each of the K concepts.

Furthermore, the generation unit 15B executes loop processing 2 that iterates the processing of step S301 and step S302 for the number of times corresponding to the number M of extended prompts used for data augmentation.

That is, the generation unit 15B assigns the word corresponding to the k-th concept to the m-th extended prompt (step S301). Then, the generation unit 15B generates the m-th training image by inputting the m-th extended prompt, to which the word corresponding to the k-th concept is assigned at step S301, into the text encoder of the image generation model to which the LoRA trained with the k-th concept is incorporated (step S302).

By iterating such loop processing 2, training images are generated for each of the M extended prompts. As a result, the second training dataset 13C2 containing the M training images is acquired.

Subsequently, the second training unit 15C divides the word S* corresponding to the k-th concept into the sequence of n pseudo-tokens <S₁*, S₂*, ..., Sₙ*> (step S303).

Thereafter, the second training unit 15C executes loop processing 3 that iterates the processing of step S304 through step S307 for the number of times corresponding to the number M of training images contained in the second training dataset 13C2.

That is, the second training unit 15C assigns a specific pseudo-token such as the first pseudo-token S₁* to the extended prompt used to generate the m-th training image (step S304).

The second training unit 15C then randomly drops out other pseudo-tokens than the specific pseudo-token, such as the second and subsequent pseudo-tokens <S₂*, ..., Sₙ*> (step S305).

Then, the second training unit 15C assigns the pseudo-tokens <S₂*, ..., Sₙ*> remaining without being randomly dropped out at step S305 to the extended prompt used to generate the m-th training image (step S306).

The second training unit 15C then retrains the parameters of the LoRAs already trained with the k-th concept, using the prompt to which the specific pseudo-token S₁* and the other pseud-tokens <S₂*, ..., Sₙ*> remaining without being randomly dropped out are assigned as the explanatory variable and using the m-th training image as the response variable (step S307).

By iterating such loop processing 3, the LoRAs already trained with the k-th concept acquire collapse resistance at the time of fusion. Furthermore, by iterating the loop processing 1, it is possible to generate LoRAs with collapse resistance at the time of fusion for each of the K concepts.

### Summary of First Embodiment

As described above, the server device 10 according to the present embodiment trains the LoRA using the prompt containing one token and part of the remaining tokens in the pseudo-token sequence assigned to the training-target concept as the explanatory variable and the image corresponding to that concept as the response variable. This allows each LoRA to acquire collapse resistance, which makes it possible to suppress occurrence of the collapse phenomenon under LoRA fusion. Therefore, with the server device 10 according to the present embodiment, quality deterioration in image generation can be suppressed.

### Second Embodiment

While the embodiment of the present disclosure is described heretofore, various applications are possible, and various different modes may be implemented in addition to the embodiment described above.

### Exercise of Creative Ability

The matters described in the above embodiment, such as the specific names of the image generation model 13A and the training-target concepts, as well as the number of LoRAs and the number of fusions are only examples and can be changed. Furthermore, as for the flowcharts described in the embodiment, the order of processing can be changed to the extent that there is no contradiction.

### System

The processing procedures, control procedures, specific names, and information including various kinds of data and parameters indicated in the above description and drawings may be changed as desired, unless otherwise noted. For example, any one or more of the first training unit 15A, the generation unit 15B, the second training unit 15C, and the fusion unit 15D of the server device 10 may be configured with separate devices.

Furthermore, each structural component of each device illustrated in the drawings is a functional concept and does not always need to be physically configured as illustrated in the drawings. In other words, the specific modes of distribution and integration of each device are not limited to those illustrated in the drawings. In other words, all or part thereof can be configured by being functionally or physically distributed and integrated in arbitrary units in accordance with various loads, usage conditions, and the like. Note that each configuration may be a physical configuration.

Furthermore, all of or any part of processing functions performed in each device may be achieved by a central processing unit (CPU) and a program that is analyzed and executed by the CPU, or may be achieved as hardware using wired logic.

### Hardware

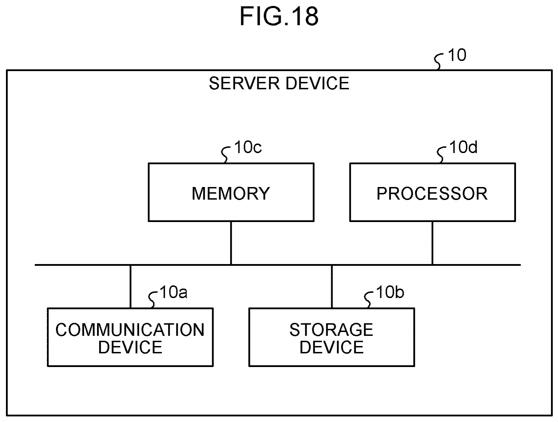

Next, an example of the hardware configuration of the computer described in the embodiment above will be described. FIG. 18 is a diagram illustrating an example of the hardware configuration. As illustrated in FIG. 18, the server device 10 includes a communication device 10a, a storage device 10b, a memory 10c, and a processor 10d. Note that units illustrated in FIG. 18 may be connected to each other by a bus or the like.

The communication device 10a is a network interface card or the like. The storage device 10b is a storage device such as a hard disk drive (HDD) or a solid state drive (SSD). For example, the storage device 10b stores programs and DBs that operate the functions illustrated in FIG. 1.

The processor 10d operates the process for executing the functions described in FIG. 1 by reading out the program for executing the same processing as that of the processing unit illustrated in FIG. 1 from the storage device 10b or the like and loading it into the memory 10c.

Such a process achieves the same functions as those of the processing unit of the server device 10. For example, the processor 10d reads out, from the storage device 10b or the like, the program having the same functions as those of the first training unit 15A, the generation unit 15B, the second training unit 15C, the fusion unit 15D, and the like. Then, the processor 10d executes the process for executing the same processing as those of the first training unit 15A, the generation unit 15B, the second training unit 15C, the fusion unit 15D, and the like.

As described, the server device 10 operates as an information processing device that executes a generation method by reading out and executing the program. The server device 10 can also achieve the same functions as those of the embodiment described above by reading out the above-described program from a recording medium using a medium reading device and executing the read-out program. Note that the program referred to in this other embodiment is not limited to being executed by the server device 10. For example, it is also possible to apply the present invention in the same manner to cases where another computer or server executes the program and where such a computer and server execute the program in cooperation.

The program described above can be distributed via a network such as the Internet. The program can also be recorded on an arbitrary recording medium and executed by a computer by being read out from the recording medium. For example, the recording medium can be achieved by a hard disk, a flexible disk (FD), a CD-ROM, a Magneto-Optical disk (MO), a Digital Versatile Disc (DVD), or the like.

## Claims

1. A generation program of a neural network used as a subnetwork to be added to an image generation AI(13A), the generation program causing a computer(10) to execute a process comprising:
training(S307) each of a plurality of neural networks(13B2) using a training dataset(13C2) that includes a plurality of pieces of training data where image data corresponding to specific concepts different for each of the neural networks is associated with a specific token and part of a plurality of tokens different from the specific token; and
fusing the neural networks(13B3) after the training to generate a subnetwork that corresponds to a plurality of concepts.

2. The generation program according to claim 1**,** wherein the training includes training a parameter of the neural network(13B2) using the specific token and part of the tokens as explanatory variables and the image data as a response variable.

3. The generation program according to claim 1**,** wherein part of the tokens is selected by random dropout.

4. The generation program according to claim 1, wherein the image generation AI(13A) is achieved by a diffusion model.

5. The generation program according to claim 1, wherein the neural network(13B2) is achieved by LoRA.

6. A generation method of a neural network used as a subnetwork to be added to an image generation AI(13A), the generation method carried out by a computer(10), comprising:
training(S307) each of a plurality of neural networks(13B2) using a training dataset(13C2) that includes a plurality of pieces of training data where image data corresponding to specific concepts different for each of the neural networks is associated with a specific token and part of a plurality of tokens different from the specific token; and
fusing the neural networks(13B3) after the training to generate a subnetwork that corresponds to a plurality of concepts.

7. The generation method according to claim 6, wherein the training includes training a parameter of the neural network(13B2) using the specific token and part of the tokens as explanatory variables and the image data as a response variable.

8. The generation method according to claim 6, wherein part of the tokens is selected by random dropout.

9. The generation method according to claim 6, wherein the image generation AI(13A) is achieved by a diffusion model.

10. The generation method according to claim 6, wherein the neural network(13B2) is achieved by LoRA.

11. An information processing device(10) for executing a generation method of a neural network used as a subnetwork to be added to an image generation AI(13A), the information processing device(10) comprising:
a training unit(15C) configured to train each of a plurality of neural networks using a training dataset that contains a plurality of pieces of training data where image data corresponding to specific concepts different for each of the neural networks is associated with a specific token and part of a plurality of tokens different from the specific token; and
a fusion unit(15D) configured to fuse the neural networks after the training to generate a subnetwork that corresponds to a plurality of concepts.

12. The information processing device(10) according to claim 11, wherein the training unit(15C) is configured to train a parameter of the neural network using the specific token and part of the tokens as explanatory variables and the image data as a response variable.

13. The information processing device(10) according to claim 11, wherein part of the tokens is selected by random dropout.

14. The information processing device(10) according to claim 11, wherein the image generation AI(13A) is achieved by a diffusion model.

15. The information processing device(10) according to claim 11, wherein the neural network(13B2) is achieved by LoRA.
